# EUROPEAN PATENT SPECIFICATION

(11) **EP 2 934 876 B1**
(45) Date of publication and mention of the grant of the patent: **08.09.2021**
(21) Application number: 13865059.3
(22) Date of filing: 23.12.2013
(51) Int. Cl.: B32B 5/22, B32B 15/08, B32B 21/08, E04B 1/94

(54) **METHOD OF PREVENTING DELAMINATION OF FLAME RETARDING STRUCTURES**
VERFAHREN ZUR VERHINDERUNG DER DELAMINIERUNG VON FLAMMHEMMENDEN STRUKTUREN
PROCÉDÉ PERMETTANT D'ÉVITER LA DÉSTRATIFICATION DE STRUCTURES IGNIFUGES

(30) Priority: 21.12.2012 FI 20126374
(43) Date of publication of application: 28.10.2015
(73) Proprietor: Metsäliitto Osuuskunta, 02100 Espoo (FI)
(72) Inventor: SOKKA, Kasperi, 44201 Suolahti (FI); HEIKKONEN, Samuli, 44201 Suolahti (FI)
(74) Representative: Laine IP Oy
(86) International application number: PCT/FI2013/051200
(87) International publication number: WO 2014/096555

(56) References cited:
- DE-A1- 2 019 770
- DE-A1- 2 019 770
- US-A- 4 935 281
- US-A- 4 935 281
- US-B1- 6 511 730
- US-B2- 6 890 638
- None

## Description

The present invention relates to a method of preventing or delaying delamination of a fire protection structure.

The present invention also relates to a multi-layer board which is used as a fire protection board, according to the preamble of Claim 1, and a use of such a board.

Board structures which are used as fire protection boards are typically comprised of a body layer and a metal layer, for example a metal board or a metal film, which is arranged at a distance from the body layer. During use, the metal layer protects the body layer in case of fire.

Between the metal film and the body layer, there is at least one but often several polymer layers which bind the structure together, but which may also serve as an insulating layer that reduces the heat flux passing through the board.

In wood-based multi-layer structures, the body layer consists of a wood board.

US Patent Specification No. 6,511,730 describes a composite board which is comprised of several layers and which comprises a fire retardant.

Published DE Patent Application No. 2019770 describes a non-combustible laminate which is comprised of 7 layers. The layers are attached to each other by means of adhesive layers.

US Patent Specification No. 4,935,281 describes a board structure which is protected against fire and which is comprised of an inner layer of plywood, an intermediate layer of metal, a glass fibre fabric and adhesive layers.

Prior art structures have good short-term fire protection properties, but at the same time it has been found that multi-layer structures are susceptible to the layers becoming detached, i.e. delamination. This reduces the capacity of the structures for fire protection, because air penetrates between and under the layers.

The present invention is based on the idea that a fire retardant is included in at least one polymer layer of a structure which is comprised of several sub-layers on top of each other, such as a multi-layer board intended to be used as a fire protection board. In addition, or alternatively, the fire retardant can also be included in the inner layer, which is arranged against the first layer, i.e. the innermost polymer layer.

Surprisingly, it has been found that the fire retardants as such do not affect the strength properties of the polymer layer within a temperature range which extends from room temperature up to the manufacturing temperature of the polymer (for example to the meltprocessing temperature). At high temperatures, i.e. above approximately 500 °C, in particular above approximately 800 °C, fire retardants, however, significantly improve the holding together of the structure of the polymer, and thus prevent delamination of the structure, in particular detachment of the fire protection layer from the body board.

More specifically, the method according to the present invention is mainly characterized by what is stated in Claim 2.

The multi-layer board according to the present invention is, in turn, characterized by what is stated in the characterizing part of Claim 1, and the use according to the present invention, by what is stated in Claim 14.

Considerable advantages are achieved with the present invention. Thus, delaying or preventing delamination can significantly slow down the break-up of the board at high temperatures, because the actual fire protection layer, such as a metal film, remains in place longer and thus protects the other layers.

By using, between the outer and inner layers, such an intermediate layer which is comprised of a non-woven fabric layer and a thermoplastic polymer film, a multi-layer structure that holds together very well is obtained. The thermoplastic polymer film is highly malleable and, when heated, conforms to the adjacent layers, and thus protects them firmly, in particular it protects the inner layer. The non-woven fabric layer of the intermediate layer, in turn, supports the thermoplastic layer. Fire retardant can be easily added to the thermoplastic polymer film, for example, during preparation of the film.

In the following, the present invention will be examined in more detail with the help of a detailed explanation and with reference to the accompanying drawing.
Figure 1 shows a side view of a board of prior art, and
Figure 2 shows a corresponding view of one of the embodiments according to the present technology.

In the present context, "composite board" refers to any combination board which is composed of layers which are formed of wood-based material, and at least one other material layer.

In the present context, "wood-based material" refers to any material which is composed of any wood material or materials that are based on wood fibres, for example wood veneer, such as softwood or hardwood veneer, or a multi-layer board, plywood or wood board or a similar wood-based material, such as blockboard, chipboard, fibreboard, including MDF and OSB.

In the present context, "adhesive layer" refers to any intermediate layer which joins together the different materials, and which is comprised of adhesive material, which is known *per se,* for example resin, phenol-formaldehyde adhesive, melamine-formaldehyde adhesive, urea-formaldehyde adhesive and/or polyurethane adhesive or any other adhesive material which is suitable for the purpose.

In the present context, "one-time compression" refers to a method in which all the desired component layers, i.e. material layers and adhesive layers, are stacked at the same time to form a preform, and a board is generated in a one-time compression step.

As described above, the present technology refers in particular to the use of fire retardant in the binder layers of a multi-layer structure, or in such a surface of this kind of structure, in which the metal layer is attached for example by means of the binder layers.

Typically, the aluminium layer which is used as a fire protection layer, is thin (thickness approximately 0.005-0.5 mm, in particular 0.005-0.1 mm), in which case it can also be used for protecting 3D shape surfaces and edges, or to protect edges which can be machined.

However, according to a more preferable embodiment, a solution according to the present invention is used in a multi-layer structure which comprises structural surfaces that are at least essentially laminar. Examples of these are different building boards and similar structures which are essentially stiff and typically self-supporting.

In one embodiment, the structure comprises a body board, such as a wood plate, or the like. At a certain distance from the body board, a fire protection layer is arranged which is comprised of an aluminium layer. Between the layers, there is an intermediate layer which comprises a binder. In at least one binder layer of this multi-layer board structure, or in a non-woven layer or in a combination of these, there is fire retardant, in order to prevent or delay, under conditions of fire, delamination of the multi-layer board structure.

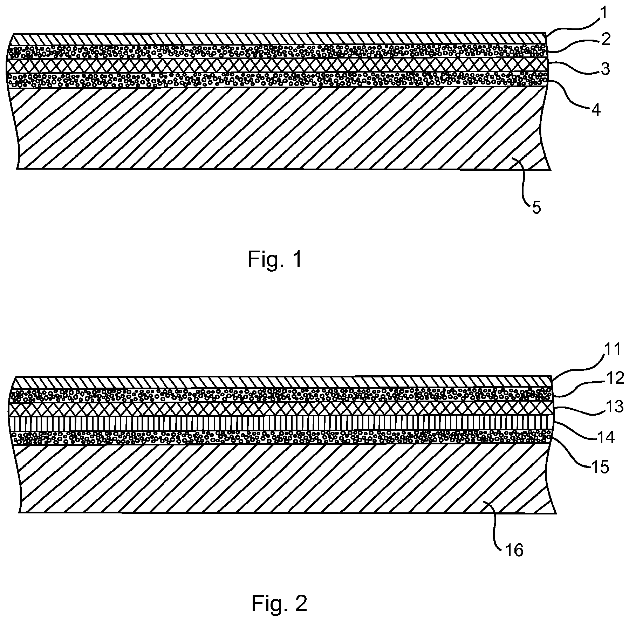

Figure 2 shows a diagram of an embodiment of the multi-layer board structure. In this embodiment, the board structure is comprised of
- an outer layer 11;
- a first polymer-based adhesive layer 12;
- a non-woven fabric which is comprised of a polymer 13;
- a thermoplastic polymer film 14;
- a second polymer-based adhesive layer 15; and
- an inner layer 16.

The body layer of wood-based multi-layer structures is comprised of a wood board or a similar wood-containing board. The outer layer acts in principle as a fire protection layer, and is therefore made of a material which is able to withstand temperatures of above 500 °C, in particular above 750 °C, most suitably above 900 °C, for a period of at least 10 seconds, in particular at least 60 seconds, most suitably at least 120 seconds.

The outer layer 11 is a thin layer or film of aluminium that can withstand fire and high temperatures.

The thickness of the aluminium film is preferably approximately 0.005-3 mm, in particular approximately 0.005-1.5 mm.

The surface of the outer layer has a lacquer layer (not shown), which provides the board structure with a desired finish and, if needed, permits printability.

The inner layer 16 is a board, in particular a structural board, which is capable of giving the board according to the present technology, desired mechanical properties, such as sufficiently high stiffness, flexural strength and impact strength, or a combination thereof.

A board which is wood-based acts as the inner layer which, within the framework of the above mentioned definition - according to the first embodiment of the technology - means that the board is entirely comprised of wood, and according to another preferred embodiment, the board is comprised of wood layers, wood battens, plywood, veneers, fibres, chips or similar wood particles, or these are included in the board. A wood-based frame is for example a wood board, wood-fibre board, or a plywood or composite board that is composed of layers of plywood or veneer on top of each other.

Typically, the wood parts are attached to each other by means of an adhesive, for example, by mixing the wood parts in the adhesive, or by applying adhesive between adjacent wood layers or wood-containing layers, in particular in the form of adhesive layers. In one preferred embodiment, the adhesive layers are uniform. They may be formed of adhesive films. In another embodiment, the adhesive layers are comprised of separate adhesive zones, such as adhesive strips. In other respects, with regard to the adhesive layers, reference can be made to the definition above.

The multi-layer boards are preferably manufactured by using a one-time compression (see above), but it is also possible to generate a multi-layer board by stacking together individual layers, in which case one composition is compressed at a time.

Wood-based multi-layer boards can comprise, besides layers of wood or layers of wood parts, also functional layers. Examples of the properties of such layers are the following: thermal insulation, a moisture barrier, impermeability to air, fire protection, mechanical stress resistance, chemical resistance, weather resistance, and combinations thereof.

With regard to the structures of functional multi-layer boards, and the production and the properties of them, reference can be made to our parallel patent applications nos. WO 2011/101546 and WO 2011/131846.

In a preferred embodiment, the board which forms the inner layer is preferably a plywood board, which is typically made of several layers of wood veneer, on top of each other, and which are attached to each other by means of adhesive layers. The thicknesses of the individual wood veneer layers are approximately 0.1-5 mm, for example approximately 0.2-3 mm.

The inner layer, i.e. body layer 16, may be made up of wood-based boards, can comprise a mineral material, which may include or consist of silicates or similar silicon oxide materials, or other inorganic, preferably essentially non-combustible materials, such as calcium salts, for example gypsum.

In the embodiment according to Figure 2, reference numerals 12 to 15 together indicate the intermediate layer of the present board. This layer binds together the outer layer and the inner layer.

According to the invention, the intermediate layer comprises a non-woven fabric layer of polyester. This fabric structure renders to the fabric intermediate layer 13 good mechanical properties.

Furthermore, the intermediate layer also comprises adhesive layers. There are at least two of these. The structure comprises at least one adhesive layer for the aluminium layer and one for the non-woven layer.

The adhesive layers are typically selected from a group which is comprised of thermosetting adhesive or thermoplastic adhesive resins, such as phenol formaldehyde (pf), melamine formaldehyde (mf), urea-formaldehyde (uf), polyurethane (pu), methylene diphenyl diisocyanate (mdi), polymeric methylene diphenyl diisocyanate (pmdi) or waterbased methylene diphenyl diisocyanate (emdi) or ethylidenebis(2.5-furandiylmethylene) diisocyanate (edfi) or a mixture thereof. Other particular examples are dispersions of emulsion polymer isocyanate and polyurethane hot-melt adhesives.

In addition to the abovementioned layers, the board in the intermediate layer also comprises at least one polyethylene film (in Figure 2) which can be arranged against the fabric layer 13. There may be several polymer films in the structure.

A suitable polymer film is made of thermoplastic. The thickness of such a thermoplastic film is approximately 0.1-10 mm, in particular approximately 0.5-5 mm. Most suitably, the thermoplastic used is an engineering plastic, such as polyolefin, polyester, polyimide, polyamide, ABS plastic or similar.

Fire retardant is included in at least one layer, which is selected from a group that is comprised of the first and the second adhesive layer and the thermoplastic polymer film.

In another embodiment, fire retardant is included in the inner layer or its surface.

Fire retardant is included in the adhesive layer, the polymer layer and/or the surface of the inner layer, in order to prevent delamination of the structure, particularly to protect the join between the surface layer 11, such as a metal film, and the inner layer, under conditions of fire or more generally under conditions in which the structure is exposed to high temperatures. Most suitably, the present technology prevents, under conditions of fire, detachment of the metal film or the like from the inner layer.

In principle, a fire retardant agent is included in at least one polymer layer, but in one embodiment, a fire retardant is included in at least two layers of a multi-layer board structure, of which layers at least one is a polymer layer.

Typically, a mineral fire retardant or an organohalogen compound or an organophosphorus compound, or a combination thereof, is used as the fire retardant.

In particular, aluminium hydroxide, alkaline earth metal hydroxide, magnesite, wollastonite, talc, antimony oxide, boron compound, such as borate, or inorganic phosphorus compound or organobromine or a brominated polymer compound or organophosphate, organophosphonate, or organophosphinate, are used as a fire retardant.

Approximately 0.001-35 %, in particular approximately 0.01-20 % of fire retardant is included in the polymer layer or the surface of the inner layer, in which case the amount of fire retardant is calculated based on the total weight of the layer in which the fire retardant is included.

Mineral fire retardants are most suitably used in a finely divided form, and, typically, mineral fire retardant is used in a particle or granular form.

The average particle size of the powder or the granules is approximately 0.1 µm-10 mm, in particular approximately 0.01 mm-5 mm.

Organic fire retardants can also be used in the form of liquid solutions and suspensions. Water or an organic solvent can be used as an intermediate agent for these solutions or suspensions. Typically, the concentration of fire retardant in the solutions or suspensions is approximately 0.1-99 % by weight, particularly approximately 1-90 % by weight, most suitably approximately 5-75 % by weight, of the total weight of the solution or suspension.

Case specifically, at the temperature at which the organic fire retardants operate they are already in a liquid state.

Compositions which are in the form of a solution or a suspension can be used in combination with, for example, materials that form adhesive layers by mixing these materials with each other. Thus, in one preferred embodiment, a modified adhesive composition is generated which is comprised of a dispersion of emulsion polymer isocyanate, or a polyurethane hot-melt adhesive, which contains a fire retardant. In such a composition, the fire retardant percentage is in particular approximately 0.001-35 % by weight, preferably approximately 0.01-20 % by weight, as described above.

Compositions which are in the form of a solution or a suspension can also be used for treatment of the surface of the inner layer. In this case, the application amounts are for example approximately 0.1-400 g, in particular approximately 1-100 g, most suitably approximately 1-50 g of fire retardant per m², depending on the fire retardant used.

When there is a polymer film in the intermediate layer, the fire retardant is preferably added already during preparation of the film. The film surface can be treated for example with compositions which comprise compatibilisers, in particular liquid fire retardant compositions which comprise reactive compatibilisers.

Preferably, the fire retardant is added to the thermoplastic polymer film during meltprocessing. Accordingly, the fire retardant can be included during the compounding process of the thermoplastic raw material, either as such with the plastic raw material, or together with the other additives, such as fillers and auxiliary agents. More preferably, the fire retardant is mixed into a polymer mass which is to be extruded, from which the polymer layer of the multi-layer board structure is generated. The polymer film can be extruded directly onto the surface. This significantly speeds up the production of the board.

It is also possible to produce the films by using the blown film or the flat film method and then separately attaching them to the surface. Typically, the film is attached for example to the surface of wood by first priming the surface and then adding to the primed layer an adhesive plastic layer that adheres to the primer. After that, the body plastic and, optionally, the surface plastic which has functional properties, are attached.

The board structure according to the present invention can be produced all together by using one-time compression. It is also possible to separately produce the body layer and the outer layer together with the intermediate layers, which are then attached to each other, for example, by stacking them into a preform and then pressing them together.

In an example, a multi-layer board is produced which is comprised of
- a lacquer layer;
- aluminium layer;
- an adhesive layer for the aluminium layer;
- a polyethylene film;
- a non-woven layer that is comprised of polyester;
- an adhesive layer for the non-woven layer; and
- a plywood board.

An aluminium film having a thickness of 30 µm acts as the surface layer. The film is attached to the non-woven fabric, which is made of polyester and the grammage of which is approximately 25 g/m². The film is attached by using a binder layer or an adhesive layer which is comprised of polyethylene, and the grammage of which is 23 g/m².

After that, the surface layer is glued to the board by using a weather-resistant polyurethane adhesive, for example a hot-melt adhesive, 60-120 g/m² of which is applied between the plywood board and the surface layer.

Polyurethane hot-melt adhesive gives extremely good results in fire tests.

The non-woven board comprises 1.4 mm birch-veneer layers which are glued together using a weather- and steam-resistant phenolic resin adhesive.

The edges of the board are sealed with acrylic paint.

### Reference Numerals List

- 1; 11: outer layer
- 2; 12: first adhesive layer
- 3; 13: non-woven fabric
- 4; 15: second adhesive layer
- 14: polymer layer
- 5; 16: inner layer

### Citations

### Patent Literature

US 6 511 730
DE 2019770
US 4 935 281
WO 2011/101546
WO 2011/131846

## Claims

1. A multi-layer board structure intended for use as a fire protection board, which structure comprises
- an inner layer (16) which is formed by a wood board, a wood-fibre board, a plywood or composite board that is formed of wood veneer layers on top of each other;
- an outer layer (11) which is arranged at a distance from the inner layer, which outer layer is comprised of a metal film; and
- an intermediate layer which is fitted between these two layers, the intermediate layer being attached to the inner layer by means of a first polymer layer (15) and the outer layer by means of a second polymer layer (12),
**characterized by** the combination that
- a fire retardant is incorporated into at least one polymer layer (15, 12) or into the inner layer (16) which is arranged against the first polymer layer (15) in order to prevent or delay delamination of the board structure under conditions in which the outer layer (11) is exposed to a high temperature, and
- the intermediate layer contains a non-woven fabric layer (13) and a thermoplastic polymer film (14) that possibly comprises a fire retardant, wherein the board structure contains, moving from the outer layer comprising a lacquer layer to the inner layer being a board,
- a lacquer layer;
- an aluminium layer;
- an adhesive layer for the aluminium layer;
- a polyethylene film;
- a non-woven layer which is comprised of polyester;
- an adhesive layer for the non-woven layer; and
- a wood board, a wood-fibre board, a plywood or composite board prepared from wood veneer layers on top of each other;
which are joined to each other.

2. A method of preventing or delaying delamination by producing a fire-protected multi-layer structure according to claim 1.

3. The method according to Claim 2, **characterized in that** the non-woven fabric in the intermediate layer is of inorganic or organic material, in particular polyester, and the thermoplastic polymer film is of polyolefin, polyester or polyamide.

4. A method according to any of Claims 2-3, **characterized in that** a fire retardant is included in at least two layers of a multi-layer board structure, at least one of which layers is a polymer layer.

5. A method according to any of Claims 2-4, **characterized by** producing a multi-layer board structure, which is comprises, starting from the outer layer, an outer layer, a second polymer-based adhesive layer, a thermoplastic polymer film, a non-woven fabric which is formed by a polyester, a first polymer-based adhesive layer, and an inner layer, a fire retardant being included in at least one layer which is chosen from the group formed by the first and the second adhesive layer and the thermoplastic polymer film.

6. A method according to any of claims 2-5, **characterized in that** the fire retardant is mixed into a polymer mass which is to be extruded, and from which mass the polymer layer of the multi-layer board structure is generated, in particularextrusion is used to prepare the first adhesive layer, the second adhesive layer or the thermoplastic polymer film, or two or more of these.

7. A method according to any of claims 2-6, **characterized in that** the layer which forms the inner layer is a wood board, wood-fibre board, or a plywood board or a composite board which is produced from several wood veneer layers on top of each other, which are attached to each other by means of adhesive layers, preferably the thicknesses of the wood veneer layers are approximately 0.1-5 mm, in particular approximately 0.5-2 mm, for example approximately 0.7-1.5 mm.

8. A method according to any of claims 2-7, **characterized in that** a fire retardant is included on the surface or in the surface layer of the inner layer.

9. A method according to any of claims 2-8, **characterized in that** the fire retardant film is a metal film of aluminium, copper or steel, or it is of ceramic material or a film or a non-woven layer that is impregnated with a ceramic material, preferably the thickness of the metal film which acts as the fire retardant film is approximately 0.005-3 mm, in particular approximately 0.005-1.5 mm.

10. A method according to any of the preceding claims 2-9, c**haracterized** in that the thickness of the intermediate layer is approximately 0.1-10 mm, in particular approximately 0.5-5 mm, preferably the intermediate layer comprises a polyethylene film, which is comprised of a fire retardant that is added into polyethylene before the extrusion.

11. A method according to any of claims 2-10, **characterized in that** the multi-layer board structure comprises adhesive layers which are of thermosetting adhesive resin or thermoplastic adhesive resin,the adhesive layers are comprised of phenol formaldehyde (pf), melamine-formaldehyde (mf), urea-formaldehyde (uf), polyurethane (pu), methylene diphenyl diisocyanate (mdi), polymeric methylene diphenyl diisocyanate (pmdi), waterbased methylene diphenyl diisocyanate (emdi) or ethylidenebis (2.5-furandiylmethylene) diisocyanate (edfi) or a mixture thereof, which mixture comprises a fire retardant, in particular a dispersion of an emulsion polymer isocyanate or polyurethane-hot melt adhesive, which comprises a fire retardant.

12. A method according to any of claims 2-11, **characterized in that** a mineral fire retardant, an organohalogen compound, or an organophosphorus compound, is used as fire retardant, preferably aluminium hydroxide, alkaline earth metal hydroxide, magnesite, antimony oxide, boron compound, such as borate, or inorganic phosphorus compound or organobromine or a brominated polymer compound or organophosphate, organophosphonate, or organophosphinate, is used as fire retardant.

13. A method according to any of claims 2-12, **characterized in that** approximately 0.001-35 %, in particular approximately 0.01-20 % of fire retardant is included in the polymer layer or on the surface of the inner layer, in which case the amount of fire retardant is calculated based on the total weight of the layer in which the fire retardant is included, wherein preferably a fire retardant is included in the polymer layer or on the surface of the inner layer in order to prevent detaching of the metal film under conditions of fire.

14. Use of a fire retardant in a binder layer and/or in the inner layer of a multi-layer board structure according to claim 1, in order to prevent or to delay delamination of the multi-layer board structure, under conditions of fire.

## Patentansprüche

1. Mehrschichtige Plattenstruktur, bestimmt für die Verwendung als Feuerschutzplatte, wobei die Struktur Folgendes umfasst
- eine Innenschicht (16), die aus einer Holzplatte, einer Holzfaserplatte, einer Sperrholz- oder einer aus übereinanderliegendem Holzfurnier gebildeten Verbundplatte gebildet ist;
- eine Außenschicht (11), die in einem Abstand von der Innenschicht angeordnet ist, wobei die Außenschicht einen Metallfilm umfasst; und
- eine Zwischenschicht, die zwischen diese beiden Schichten eingepasst ist, wobei die Zwischenschicht an die Innenschicht mittels einer ersten Polymerschicht(15) und die Außenschicht mittels einer zweiten Polymerschicht(12) befestigt ist,
**dadurch gekennzeichnet, dass** die Kombination
- ein Feuerhemmer ist, der in mindestens eine Polymerschicht (15, 12) oder in die Innenschicht (16) aufgenommen ist, die gegen die erste Polymerschicht (15) angeordnet ist, um Schichtablösung der Plattenstruktur unter Bedingungen, unter denen die Außenschicht (11) einer sehr hohen Temperatur ausgesetzt ist, zu verhindern oder zu verzögern, und
- die Zwischenschicht eine Vliesstoffschicht (13) und einen thermoplastischen Polymerfilm (14) enthält, der möglicherweise einen Feuerhemmer umfasst,
wobei die Plattenstruktur, von der Außenschicht, die eine Lackschicht umfasst, zur Innenschicht, die eine Platte ist, hin Folgendes enthält,
- eine Lackschicht;
- eine Aluminiumschicht;
- eine Klebeschicht für die Aluminiumschicht;
- einen Polyäthylenfilm;
- eine Vliesschicht, die Polyester umfasst;
- eine Klebeschicht für die Vliesschicht; und
- eine Holzplatte, eine Holzfaserplatte, eine Sperrholz- oder Verbundplatte, die aus übereinanderliegenden Holzfurnierschichten zubereitet ist;
die untereinander verbunden sind.

2. Verfahren zum Verhindern oder Verzögern von Schichtablösung durch Herstellen einer gegen Feuer geschützten mehrschichtigen Struktur nach Anspruch 1.

3. Verfahren nach Anspruch 2, **dadurch gekennzeichnet, dass** der Vliesstoff in der Zwischenschicht aus anorganischem oder organischem Material, insbesondere Polyester, besteht, und der thermoplastischen Polymerfilm aus Polyolefin, Polyester oder Polyamid besteht.

4. Verfahren nach einem der Ansprüche 2-3, **dadurch gekennzeichnet, dass** ein Feuerhemmer in mindestens zwei Schichten einer mehrschichtigen Plattenstruktur eingeschlossen ist, wobei mindestens eine der Schichten eine Polymerschicht ist.

5. Verfahren nach einem der Ansprüche 2-4, **gekennzeichnet durch** Herstellen einer mehrschichtigen Plattenstruktur, die an der Außenschicht beginnend eine Außenschicht, eine zweite Klebeschicht auf Polymergrundlage, einen thermoplastischen Polymerfilm, einen Vliesstoff, der **durch** ein Polyester gebildet ist, eine erste Klebeschicht auf Polymergrundlage und eine Innenschicht umfasst, wobei ein Feuerhemmer in mindestens eine Schicht aufgenommen ist, die ausgewählt ist aus der Gruppe gebildet von der ersten und der zweiten Klebeschicht und dem thermoplastischen Polymerfilm.

6. Verfahren nach einem der Ansprüche 2-5, **dadurch gekennzeichnet, dass** der Feuerhemmer in eine zu extrudierende Polymermasse eingemischt ist, und wobei aus der Masse die Polymerschicht der mehrschichtigen Plattenstruktur erzeugt wird, insbesondere unter Verwendung von Extrusion, um die erste Klebeschicht, die zweite Klebeschicht oder den thermoplastischen Polymerfilm oder zwei oder mehr davon zuzubereiten.

7. Verfahren nach einem der Ansprüche 2-6, **dadurch gekennzeichnet, dass** die Schicht, die die Innenschicht bildet, eine Holzplatte, Holzfaserplatte oder eine Sperrholzplatte oder eine Verbundplatte ist, die aus verschiedenen, übereinanderliegenden Holzfurnierschichten hergestellt ist, die aneinander mittels Klebeschichten befestigt sind, wobei die Dicke der Holzfurnierschichten vorzugsweise 0,1-5 mm, insbesondere ungefähr 0,5-2 mm, beispielsweise ungefähr 0,7-1,5 mm beträgt.

8. Verfahren nach einem der Ansprüche 2-7, **dadurch gekennzeichnet, dass** ein Feuerhemmer in die Oberfläche oder in die Oberflächenschicht der Innenschicht aufgenommen ist.

9. Verfahren nach einem der Ansprüche 2-8, **dadurch gekennzeichnet, dass** der Feuerhemmerfilm ein Metallfilm aus Aluminium, Kupfer oder Stahl ist, oder aus Keramikmaterial oder einem Film oder einer Vliesschicht ist, die mit einem Keramikmaterial getränkt ist, wobei die Dicke des Metallfilms, der als der Feuerhemmerfilm wirkt, vorzugsweise ungefähr 0,005-3 mm, insbesondere ungefähr 0,005-1,5 mm beträgt.

10. Verfahren nach einem der vorstehenden Ansprüche 2 - 9, **dadurch gekennzeichnet, dass** die Dicke der Zwischenschicht ungefähr 0,1-10mm, insbesondere ungefähr 0,5-5 mm beträgt, wobei die Zwischenschicht vorzugsweise einen Polyäthylenfilm umfasst, der einen Feuerhemmer umfasst, der dem Polyäthylen vor der Extrusion beigegeben wird.

11. Verfahren nach einem der Ansprüche 2-10, **dadurch gekennzeichnet, dass** die mehrschichtige Plattenstruktur Klebeschichten umfasst, die aus hitzehärtbarem Klebharz oder thermoplastischem Klebharz sind, wobei die Klebeschichten Phenolformaldehyd (pf), Melaminformaldehyd (mf), Harnstoff-Formaldehyd (uf), Polyurethan (pu), Methylendiphenylisocyanat (mdi), polymeres Methylendiphenylisocyanat (pmdi), Methylendiphenylisocyanat auf Wasserbasis (emdi) oder Ethyliden-bis-(2.5-Furandiylmethylen)isocyanate (edfi) oder eine Mischung daraus umfassen, wobei die Mischung einen Feuerhemmer umfasst, insbesondere eine Dispersion eines Emulsions-Polymer-Isocyanats oder eines Polyurethan-Heißschmelzklebers, der einen Feuerhemmer umfasst.

12. Verfahren nach einem der Ansprüche 2-11, **dadurch gekennzeichnet, dass** ein mineralischer Feuerhemmer, eine Organohalogenverbindung oder eine Organophosphorverbindung als Feuerhemmer verwendet wird, vorzugsweise Aluminiumhydroxid, Erdalkalimetallhydroxid, Magnesit, Antimonoxid, Borverbindung, wie Borat, oder anorganische Phosphorverbindung oder Organobrom- oder eine bromierte Polymerverbindung oder Organophosphat, Organophosphonat oder Organophosphinat, als Feuerhemmer verwendet wird.

13. Verfahren nach einem der Ansprüche 2-12, **dadurch gekennzeichnet, dass** ungefähr 0n001-35%, insbesondere ungefähr 0,01-20% Feuerhemmer in der Polymerschicht oder in der Oberfläche der Innenschicht eingeschlossen sind, wobei die Menge von Feuerhemmer auf der Grundlage des Gesamtgewichts der Schicht, in die der Feuerhemmer eingeschlossen wird, berechnet wird, wobei vorzugsweise ein Feuerhemmer in die Polymerschicht oder in die Oberfläche der Innenschicht eingeschlossen ist, um das Ablösen des Metallfilms unter Feuerbedingungen zu verhindern.

14. Verwenden eines Feuerhemmers in einer Binderschicht und/oder in der Innenschicht einer mehrschichtigen Plattenstruktur nach Anspruch 1, um Schichtablösung der mehrschichtigen Plattenstruktur unter Feuerbedingungen zu verhindern oder zu verzögern.

## Revendications

1. Structure de panneau multicouche destinée à être utilisée comme un panneau de protection incendie, laquelle structure comprend
- une couche interne (16) qui est formée par un panneau en bois, un panneau de fibres de bois, un contreplaqué ou un panneau composite qui est formé de couches de placages de bois les unes sur les autres ;
- une couche externe (11) qui est agencée à une certaine distance de la couche interne, laquelle couche externe se compose d'un film métallique ; et
- une couche intermédiaire qui est disposée entre ces deux couches, la couche intermédiaire étant fixée à la couche interne au moyen d'une première couche polymère (15) et à la couche externe au moyen d'une seconde couche polymère (12),
**caractérisée par** l'association en ce que
- un produit ignifuge est intégré dans au moins une couche polymère (15, 12) ou dans la couche interne (16) qui est agencée contre la première couche polymère (15) afin d'éviter ou de retarder le délaminage de la structure de panneau dans des conditions dans lesquelles la couche externe (11) est exposée à une température élevée, et
- la couche intermédiaire contient une couche de tissu non tissé (13) et un film polymère thermoplastique (14) qui comprend éventuellement un produit ignifuge,
dans laquelle la structure de plaque contient, en se déplaçant de la couche externe comprenant une couche de vernis vers la couche interne étant un panneau,
- une couche de vernis ;
- une couche d'aluminium ;
- une couche adhésive pour la couche d'aluminium ;
- un film de polyéthylène ;
- une couche non tissée qui se compose de polyester ;
- une couche adhésive pour la couche non tissée ; et
- un panneau en bois, un panneau de fibres de bois, un contreplaqué ou un panneau composite préparé à partir de couches de placages de bois les unes sur les autres ;
qui sont reliés entre eux.

2. Procédé permettant d'éviter ou de retarder le délaminage en produisant une structure multicouche ignifugée selon la revendication 1.

3. Procédé selon la revendication 2, **caractérisé en ce que** le tissu non tissé dans la couche intermédiaire est en matériau inorganique ou organique, en particulier en polyester, et le film polymère thermoplastique est en polyoléfine, en polyester ou en polyamide.

4. Procédé selon l'une quelconque des revendications 2-3, **caractérisé en ce qu'**un produit ignifuge est inclus dans au moins deux couches d'une structure de panneau multicouche, au moins l'une desdites couches est une couche polymère.

5. Procédé selon l'une quelconque des revendications 2-4, **caractérisé par** la production d'une structure de panneau multicouche, qui comprend, en commençant par la couche externe, une couche externe, une seconde couche adhésive à base de polymère, un film polymère thermoplastique, un tissu non tissé qui est formé par un polyester, une première couche adhésive à base de polymère, et une couche interne, un produit ignifuge étant inclus dans au moins une couche qui est choisie parmi le groupe formé par les première et seconde couches adhésives et le film polymère thermoplastique.

6. Procédé selon l'une quelconque des revendications 2-5, **caractérisé en ce que** le produit ignifuge est mélangé dans une masse polymère qui doit être extrudée, et à partir de laquelle masse la couche polymère de la structure de panneau multicouche est générée, en particulier l'extrusion est utilisée pour préparer la première couche adhésive, la seconde couche adhésive ou le film polymère thermoplastique, ou deux ou plusieurs d'entre eux.

7. Procédé selon l'une quelconque des revendications 2-6, **caractérisé en ce que** la couche qui forme la couche interne est un panneau en bois, un panneau de fibres de bois ou un panneau de contreplaqué ou un panneau composite qui est produit à partir de plusieurs couches de placage de bois les unes sur les autres, qui sont fixées les unes aux autres au moyen de couches adhésives, de préférence l'épaisseur des couches de placage de bois vont d'environ 0,1-5 mm, en particulier d'environ 0,5-2 mm, par exemple d'environ 0,7-1,5 mm.

8. Procédé selon l'une quelconque des revendications 2-7, **caractérisé en ce qu'**un produit ignifuge est inclus à la surface ou dans la couche superficielle de la couche interne.

9. Procédé selon l'une quelconque des revendications 2-8, **caractérisé en ce que** le film ignifuge est un film métallique d'aluminium, de cuivre ou d'acier, ou il est en matériau céramique ou un film ou une couche non tissée qui est imprégnée avec un matériau céramique, de préférence l'épaisseur du film métallique qui agit comme le film ignifuge est d'environ 0,005-3 mm, en particulier d'environ 0,005-1,5 mm.

10. Procédé selon l'une quelconque des revendications 2-9, **caractérisé en ce que** l'épaisseur de la couche intermédiaire est d'environ 0,1-10 mm, en particulier d'environ 0,5 à 5 mm, de préférence la couche intermédiaire comprend un film de polyéthylène, qui se compose d'un produit ignifuge qui est ajouté au polyéthylène avant l'extrusion.

11. Procédé selon l'une quelconque des revendications 2-10, **caractérisé en ce que** la structure de panneau multicouche comprend des couches adhésives qui sont en résine adhésive thermodurcissable ou en résine adhésive thermoplastique, les couches adhésives se composent de phénol-formaldéhyde (pf), mélamine-formaldéhyde (mf), urée-formaldéhyde (uf), polyuréthane (pu), diisocyanate de diphénylméthylène (mdi), diisocyanate de diphénylméthylène polymère (pmdi), diisocyanate de diphénylméthylène à base d'eau (emdi) ou éthyidènebis(2,5-furandiylméthylène)diisocyanate (edfi) ou un mélange de ceux-ci, lequel mélange comprend un produit ignifuge, en particulier une dispersion d'un isocyanate polymère en émulsion ou un adhésif thermofusible en polyuréthane, qui comprend un produit ignifuge.

12. Procédé selon l'une quelconque des revendications 2-11, **caractérisé en ce qu'**un produit ignifuge minéral, un composé organohalogéné, ou un composé organophosphoré, est utilisé comme un produit ignifuge, de préférence un hydroxyde d'aluminium, un hydroxyde de métal alcalino-terreux, un magnésite, un oxyde d'antimoine, un composé de bore, tel que le borate, ou un composé de phosphore inorganique ou un composé organobromé ou un composé polymère bromé ou un composé organophosphoré, un organophosphonate ou un organophosphinate, est utilisé comme produit ignifuge.

13. Procédé selon l'une quelconque des revendications 2-12, **caractérisé en ce qu'**environ 0,001-35 %, en particulier environ 0,01-20 % de produit ignifuge est inclus dans la couche polymère ou à la surface de la couche interne, auquel cas la quantité de produit ignifuge est calculée en fonction du poids total de la couche dans laquelle le produit ignifuge est inclus, dans lequel de préférence un produit ignifuge est inclus dans la couche polymère ou à la surface de la couche interne afin d'éviter le détachement du film métallique dans des conditions d'incendie.

14. Utilisation d'un produit ignifuge dans une couche de liant et/ou dans la couche interne d'une structure de panneau multicouche selon la revendication 1, afin d'éviter ou de retarder le délaminage de la structure de panneau multicouche, dans des conditions d'incendie.
